# EUROPÄISCHE PATENTSCHRIFT

(11) **EP 2 680 384 B1**
(45) Veröffentlichungstag und Bekanntmachung des Hinweises auf die Patenterteilung: **15.11.2017**
(21) Anmeldenummer: 13003035.6
(22) Anmeldetag: 13.06.2013
(51) Int. Cl.: H02G 11/00, B25J 19/00, F16L 3/16, H02G 3/32

(54) **FLEXIBLE KABELFÜHRUNG**
FLEXIBLE CABLE ROUTE
GUIDE DE CÂBLE FLEXIBLE

(30) Priorität: 25.06.2012 DE 102012012411
(43) Veröffentlichungstag der Anmeldung: 01.01.2014
(73) Patentinhaber: Airbus Defence and Space GmbH, 85521 Ottobrunn (DE)
(72) Erfinder: Hoffmann, Gerhard, 85077 Manching (DE)
(74) Vertreter: Isarpatent

(56) Entgegenhaltungen:
- EP-A1- 2 463 533
- DE-A1- 10 211 212
- JP-A- 2007 159 369

## Beschreibung

Die Erfindung betrifft eine flexible Kabelführung. Im vorliegenden Zusammenhang sollen unter Kabel sowohl Kabel als auch Leitungen verstanden werden, also etwa Stromkabel für elektrischen Strom, Datenleitungen, Hochfrequenzkabel, Flüssigkeitsleitungen und dergleichen. Eine flexible Kabelführung ist immer dann erforderlich, wenn Kabel nicht starr an einem Gegenstand angebracht werden können, den sie versorgen sollen, da der Gegenstand in gewissem Ausmaß beweglich ist, so dass sich zumindest die Kabelenden in der Nähe des Gegenstandes mit diesem bewegen müssen.

Weiterhin betrifft die Erfindung eine mit einer derartigen flexiblen Kabelführung versehene elektronisch gescannte Radarantenne, abgekürzt als E-Scan-Antenne bezeichnet. Derartige E-Scan-Antennen werden auch als AESA (Active Electronically Scanned Array) bezeichnet. Ein typisches Einsatzgebiet für E-Scan-Antennen sind moderne Kampfflugzeuge. So entwickelte Selex Galileo das AESA-Radarsystem des Typs Raven ES-05 für das Gripen-Programm; dieser Typ weist einen Taumelscheiben-Repositionierer (swashplate repositioner) auf. Weiterhin stellte Selex Galileo im Juli 2010 in Farnborough das Captor-E AESA-Radar für den Eurofighter Typhoon vor, welches ebenfalls einen Taumelscheiben-Repositionierer aufweist.

Bei derartigen E-Scan-Antennen ist zwischen dem elektronisch erfolgenden Scan und der mechanischen Ausrichtung oder Positionierung/Repositionierung der E-Scan-Antenne zu unterscheiden. DE 10211212 A offenbart eine Kabelführung mit einem Gelenklager zum Durchführen eines Kabelbaums. Der Erfindung liegt die Aufgabe zugrunde, eine flexible Kabelführung zur Verfügung zu stellen, mit welcher mehrere Kabel flexibel, also nicht starr, zu einem Gegenstand geführt werden können, der sich in gewissem Ausmaß bewegen kann. Diese Kabelführung soll auch bei einer E-Scan-Antenne einsetzbar sein, selbst unter den bei einem modernen Kampfflugzeug, beispielsweise des Typs Eurofighter Typhoon, auftretenden Betriebsbedingungen. Die Aufgabe wird gelöst durch eine Kabelführung mit einer Gelenkwelle, die einen ersten Gelenkwellenkopf an einem in Längsrichtung der Kabelführung vorderen Ende eines Wellenstücks und einen zweiten Gelenkwellenkopf am in Längsrichtung der Kabelführung hinteren Ende des Wellenstücks aufweist, mit einer Vorrichtung zur Befestigung eines Kabelbaums am zweiten Gelenkwellenkopf, und mit einem Gelenklager, das im Abstand im Verlauf des Kabelbaums in Längsrichtung der Kabelführung hinter dem zweiten Gelenkwellenkopf ortsfest angeordnet und zum Durchführen des Kabelbaums ausgebildet ist. Bei dieser Kabelführung werden etwa dort, wo sich der zweite Gelenkwellenkopf befindet, die zum zu versorgenden Gegenstand führenden einzelnen Kabel zu einem Kabelbaum gebündelt, der dann durch das Gelenklager geführt wird.

Bei einer Ausführungsform der Erfindung ist der erste und/oder der zweite Gelenkwellenkopf als Kugelgelenk ausgebildet. Jeder dieser Gelenkwellenköpfe kann jedoch auch beispielsweise als Kreuzgelenk oder Kardangelenk ausgebildet sein; es eignet sich im Prinzip jeder Gelenkwellenkopf, der die Kinematik ermöglicht, die durch die Art der Bewegung des zu versorgenden Gegenstandes vorgegeben ist.

Bei einer Ausführungsform der Erfindung ist das Gelenklager als sphärisches Lager ausgebildet. Es lassen sich jedoch auch andere Gelenklager einsetzen, welche die für die Führung des Kabelbaums notwendige Kinematik ermöglichen.

Weiterhin wird gemäß der Erfindung eine E-Scan-Antenne mit einer Kabelführung vorgeschlagen, die wie voranstehend geschildert ausgebildet ist, und mit einem Repositionierer versehen ist, an welchem das Gelenklager ortsfest angebracht ist, wobei der erste Gelenkwellenkopf an der E-Scan-Antenne angebracht ist.

Hierdurch kann eine E-Scan-Antenne zur Verfügung gestellt werden, die zum Einsatz bei einem modernen Kampfflugzeug geeignet ist. Selbstverständlich ist die E-Scan-Antenne jedoch nicht auf Einsätze bei Kampfflugzeugen beschränkt, sondern lässt sich überall dort einsetzen, wo ein Radar mit einer E-Scan-Antenne eingesetzt werden soll.

Bei einer Ausführungsform der Erfindung ist die E-Scan-Antenne so ausgebildet, dass der Repositionierer als Taumelscheiben-Repositionierer ausgebildet ist. Hierdurch lässt sich eine verlässliche und schnelle Positionierung oder Repositionierung der E-Scan-Antenne erzielen.

Ist gemäß einer weiteren Ausführungsform der E-Scan-Antenne gemäß der Erfindung der Repositionier als Doppel-Taumelscheiben-Repositionierer ausgebildet, so wird hiermit eine erhöhte Variabilität der Repositionierung erzielt, allerdings verbunden mit einem erhöhten mechanischen Aufwand.

Bei einer Ausführungsform der E-Scan-Antenne gemäß der Erfindung weist der Repositionierer zumindest eine Innenverzahnung auf. Durch eine derartige Innenverzahnung wird eine verlässliche und exakte Verstellung des Repositionierers ermöglicht.

Hierzu ist gemäß einer weiteren Ausführungsform der Erfindung bei jeder Innenverzahnung ein Elektromotor für deren Antrieb vorgesehen, und ist für jeden Elektromotor eine Anordnung mit zwei Endschaltern zur Begrenzung des Drehwinkels der jeweiligen Innenverzahnung vorgesehen. Auf diese Weise lässt sich der Drehwinkel zuverlässig begrenzen.

Nachfolgend wird anhand der beigefügten Zeichnungen näher auf Ausführungsbeispiele der Erfindung eingegangen. Es zeigt:
**Fig. 1** eine E-Scan-Antenne mit einem Doppel-Taumelscheiben-Repositionierer; und
**Fig. 2** eine perspektivische Ansicht einer Kabelführung mit einer E-Scan-Antenne gemäß der Erfindung.

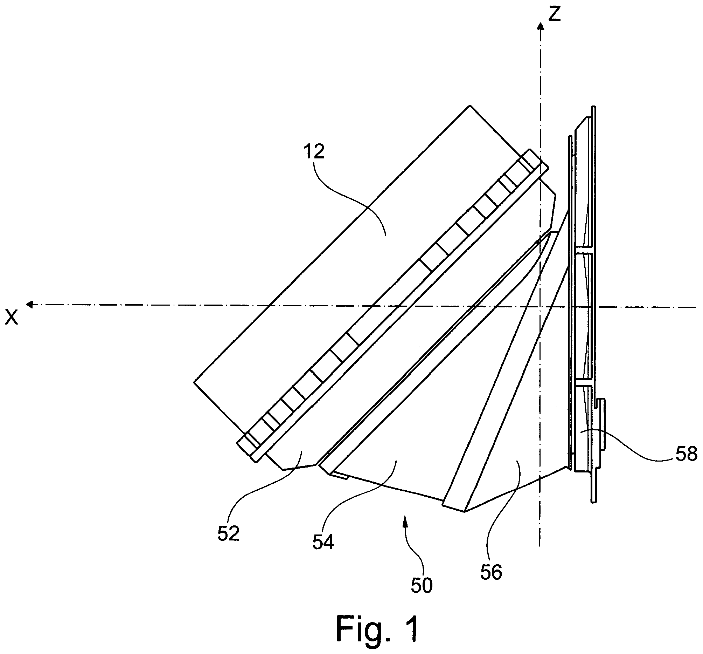

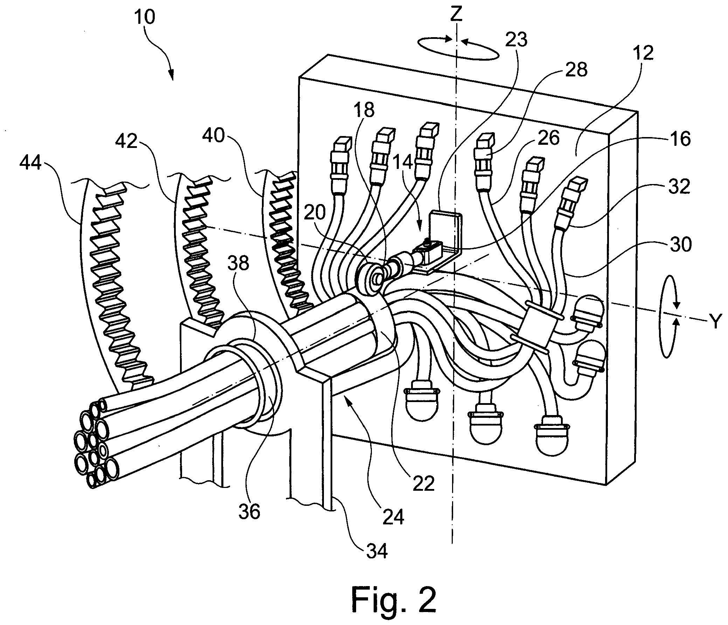

In den Figuren 1 und 2 ist mit x die Längsachse eines Kampfflugzeuges bezeichnet, mit y die Querachse, und mit z die Gier-Achse, was den drei Bewegungen Rollen (x), Nicken (y) bzw. Gieren (z) entspricht.

In Fig. 1 ist eine E-Scan-Antenne 12 in ihrer maximal nach oben (in Richtung z) verkippten Ausrichtung dargestellt. Mit Hilfe eines Polarisationsringes 52 lässt sich die E-Scan-Antenne 12 drehen, was zur Beibehaltung der Polarisationsebene der von der E-Scan-Antenne 12 abgestrahlten elektromagnetischen Energie dient, wenn die E-Scan-Antenne 12 durch die Doppel-Taumelscheiben-Anordnung verstellt wird, die durch einen vorderen Konusring 54 und einen hinteren Konusring 56 gebildet wird. Weiterhin weist der Repositionierer 50 eine Befestigungsplatte 58 auf, mit welcher die gesamte in Fig. 1 dargestellte Anordnung aus E-Scan-Antenne 12 und Repositionierer 50 an der Struktur des Flugzeuges angebracht wird. Der Repositionierer 50 umfasst dabei die mit den Bezugszeichen 52, 54, 56, 58 bezeichneten Teile.

Mit der in Fig. 2 dargestellten Kabelführung 10 wird erreicht, dass sämtliche für die Versorgung der E-Scan-Antenne 12 erforderlichen Kabel sicher und verlässlich durch den Repositionierer 50 geführt werden, auch wenn die E-Scan-Antenne 12 sämtliche zulässigen Bewegungen ausführt, die durch den Polarisationsring 52, den vorderen Konusring 54 und den hinteren Konusring 56 ermöglicht werden.

An der Rückseite der E-Scan-Antenne 12 ist eine Halterung 23 vorgesehen, an welcher ein vorderer (erster) (Begriffe wie vorne und hinten beziehen sich auf das Flugzeug, an dessen vorderem Ende die E-Scan-Antenne 12 angebracht ist) Gelenkwellenkopf 16 an einer Gelenkwelle 14 angebracht ist. Die Gelenkwelle 14 weist über den Gelenkwellenkopf 16 hinaus ein Wellenstück 18 und einen hinteren (zweiten) Gelenkwellenkopf 20 auf. Die beiden Gelenkwellenköpfe 16, 20 sind jeweils als Kugelgelenk ausgebildet. Die Länge der gesamten Gelenkwelle 14 beträgt etwa 8 Zentimeter.

Die zur E-Scan-Antenne 12 führenden Kabel sind in Fig. 2 nur schematisch dargestellt; beispielhaft sind gezeigt ein HF-Kabel 26, das über einen Winkelstecker 28 an die E-Scan-Antenne 12 angeschlossen ist, sowie ein HF-Kabel 30, das einen Winkelstecker 32 für den Anschluss aufweist.

Ein Lagerbock 34 ist ortsfest angeordnet, etwa auf der Befestigungsplatte 58. Ein sphärisches Lager weist einen in dem Lagerbock 34 festgelegten Außenring 38 und einen Innenring 36 auf, durch welchen der Kabelbaum 24 geführt ist, der dadurch entsteht, dass sämtliche einzelnen Kabel auf geeignete Art und Weise, beispielsweise durch eine Manschette 22, gebündelt werden, die durch eine nicht dargestellte Befestigungsvorrichtung am hinteren (zweiten) Gelenkwellenkopf 20 befestigt ist. Der Abstand zwischen dem vorderen Ende des Kabelbaums, etwa dem vorderen Ende der Manschette 22, und dem Lagerbock 34 beträgt etwa 13 Zentimeter.

Die in Fig. 2 durch Doppelpfeile angedeuteten Drehwinkel um die z-Achse bzw. die y-Achse betragen jeweils ± 45 Grad. Der Aufwand zur Versorgung der E-Scan-Antenne 12, die selbst etwa 100 Kilogramm wiegt, ist beträchtlich, da die abgestrahlte Sendeleistung 8 kW beträgt. Es sind daher entsprechende Kabelquerschnitte für die Versorgung der E-Scan-Antenne 12 erforderlich, sowohl bei Stromkabeln als auch bei Flüssigkühlleitungen. Hinzu kommt die Stromversorgung für drei Elektromotoren zum Antrieb des Polarisationsrings 52, des vorderen Konusrings 54, und des hinteren Konusrings 56, wobei in Fig. 2 eine erste Innenverzahnung 40 zum Antrieb des Polarisationsrings 52 dient, eine zweite Innenverzahnung 42 zum Antrieb des vorderen Konusrings 54, und eine dritte Innenverzahnung 44 zum Antrieb des hinteren Konusrings 56 gezeigt sind. Von den drei Innenverzahnungen 40, 42 und 44 ist jeweils nur ein kurzer Abschnitt in Fig. 2 schematisch dargestellt, tatsächlich erstrecken sich natürlich diese Innenverzahnungen jeweils über den vollständigen Umfang.

Im Einzelnen sind zur Versorgung der E-Scan-Antenne 12 erforderlich: ein Stromkabel mit einem Durchmesser von 16 Millimeter; drei Datenleitungen mit einem Querschnitt von jeweils 17 Millimeter, zwei Flüssigkühlleitungen mit einem Querschnitt von jeweils 15 Millimeter, und sechs HF-Kabel mit einem Querschnitt von jeweils 7 Millimeter. Der Repositionierer muss versorgt werden mit: drei Motorstromkabeln mit einem Durchmesser von jeweils 5 Millimeter, und drei Verkabelungsleitungen mit einem Durchmesser von jeweils 6 Millimeter für die Verkabelung der Endschalter.

Durch die Manschette 22 zu einem Kabelbaum 24 zusammengefügt weist dieser einen Querschnitt von weniger als 70 Millimeter auf, so dass für den freien Innendurchmesser des Innenrings 36 des sphärischen Lagers 36, 38 ein Wert von 70 Millimeter ausreichend ist.

Die Gelenkwelle 14 mit den beiden Kugelgelenken 16, 20 kann (Luftfahrtzugelassen) bezogen werden von RWG Frankenjura-Industrie Flugwerklager GmbH unter der Modellbezeichnung "Link Z-Mount", P/N 603448.

### Bezugszeichenliste

- 10: Kabelführung
- 12: E-Scan-Antenne
- 14: Gelenkwelle
- 16: (vorderer) Gelenkwellenkopf (Kugelgelenk)
- 18: Wellenstück
- 20: (hinterer) Gelenkwellenkopf
- 22: Manschette
- 23: Halterung (für 16)
- 24: Kabelbaum
- 26: HF-Kabel
- 28: Winkelstecker
- 30: HF-Kabel
- 32: Winkelstecker
- 34: Lagerbock
- 36, 38: sphärisches Lager
- 36: Innenring
- 38: Außenring
- 40: erste Innenverzahnung (für 52)
- 42: zweite Innenverzahnung (für 54)
- 44: dritte Innenverzahnung (für 56)
- 46:
- 48:
- 50: Repositionierer
- 52: Polarisationsring
- 54: vorderer Konusring
- 56: hinterer Konusring
- 58: Befestigungsplatte

## Patentansprüche

1. Kabelführung (10) mit einer Gelenkwelle (14), die einen ersten Gelenkwellenkopf (16) an einem in Längsrichtung der Kabelführung (10) vorderen Ende eines Wellenstücks (18) und einen zweiten Gelenkwellenkopf (20) am in Längsrichtung der Kabelführung (10) hinteren Ende des Wellenstücks (18) aufweist, mit einer Vorrichtung zur Befestigung eines Kabelbaums (24) am zweiten Gelenkwellenkopf (20), und mit einem Gelenklager (36, 38), das im Abstand im Verlauf des Kabelbaums (24) in Längsrichtung der Kabelführung (10) hinter dem zweiten Gelenkwellenkopf (20) ortsfest angeordnet und zum Durchführen des Kabelbaums (24) ausgebildet ist.

2. Kabelführung nach Anspruch 1, bei welcher der erste (16) und/oder der zweite Gelenkwellenkopf (20) als Kugelgelenk ausgebildet ist.

3. Kabelführung nach Anspruch 1 oder 2, bei welcher das Gelenklager als sphärisches Lager (36, 38) ausgebildet ist.

4. E-Scan-Antenne (12) mit einer Kabelführung (10) nach einem der Ansprüche 1 bis 3, und mit einem Repositionierer (50), an welchem das Gelenklager (36, 38) ortsfest angebracht ist, wobei der erste Gelenkwellenkopf (16) an der E-Scan-Antenne (12) angebracht ist.

5. E-Scan-Antenne nach Anspruch 4, bei welcher der Repositionierer als Taumelscheiben-Repositionierer ausgebildet ist.

6. E-Scan-Antenne nach Anspruch 4, bei welcher der Repositionierer als Doppel-Taumelscheiben-Repositionierer (50) ausgebildet ist.

7. E-Scan-Antenne nach einem der Ansprüche 4 bis 6, bei welcher der Repositionierer (50) zumindest eine Innenverzahnung (40; 42; 44) aufweist.

8. E-Scan-Antenne nach Anspruch 7, bei welcher für jede Innenverzahnung (40; 42; 44) ein Elektromotor für deren Antrieb vorgesehen ist, und für jeden Elektromotor zwei Endschalter zur Begrenzung des Drehwinkels der jeweiligen Innenverzahnung vorgesehen sind.

## Claims

1. Cable layout (10) with a jointed shaft (14), which has a first rod end (16) at a forward end of a shaft portion (18) in the longitudinal direction of the cable layout (10) and a second rod end (20) at the rear end of the shaft portion (18) in the longitudinal direction of the cable layout (10), with a device for fixing a cable harness (24) to the second rod end (20), and with a joint bearing (36, 38), which is permanently arranged at a distance along the cable harness (24) behind the second rod end (20) in the longitudinal direction of the cable layout (10) and is provided for passing the cable harness through (24).

2. Cable layout according to claim 1, wherein the first (16) and/or the second rod end (20) is provided as a ball joint.

3. Cable layout according to claim 1 or claim 2, wherein the joint bearing is provided as a spherical bearing (36, 38).

4. E-scan antenna (12) with a cable layout (10) according to any one of claims 1 to 3, and with a repositioner (50) on which the joint bearing (36, 38) is permanently mounted, wherein the first rod end (16) is attached to the e-scan antenna (12).

5. E-scan antenna according to claim 4, wherein the repositioner is provided as a swashplate repositioner.

6. E-scan antenna according to claim 4, wherein the repositioner is provided as a double swashplate repositioner (50).

7. E-scan antenna according to any one of claims 4 to 6, wherein the repositioner (50) has at least one internal gear (40; 42; 44).

8. E-scan antenna according to claim 7, wherein an electric motor is provided for driving each internal gear (40; 42; 44), and wherein two limit switches are provided for each electric motor to limit the angle of rotation of the respective internal gear.

## Revendications

1. Guide de câble (10) comportant un arbre de transmission (14), qui présente une première tête d'arbre de transmission (16) sur une extrémité d'une pièce d'arbre (18) avant, dans la direction longitudinale du guide de câble (10), et une seconde tête d'arbre de transmission (20) sur l'extrémité de la pièce d'arbre (18) arrière, dans la direction longitudinale du guide de câble (10), comportant un dispositif de fixation d'un faisceau de câbles (24) sur la seconde tête d'arbre de transmission (20), et comportant un palier à rotule (36, 38), qui est disposé de manière fixe à distance dans le tracé du faisceau de câbles (24) dans la direction longitudinale du guide de câble (10) derrière la seconde tête d'arbre de transmission (20) et est configuré pour mettre en oeuvre le faisceau de câbles (24).

2. Guide de câble selon la revendication 1, dans lequel la première (16) et/ou la seconde tête d'arbre de transmission (20) est configurée sous la forme d'un joint sphérique.

3. Guide de câble selon la revendication 1 ou 2, dans lequel le palier à rotule est configuré sous la forme d'un palier sphérique (36, 38).

4. Antenne à balayage électronique (12) comportant un guide de câble (10) selon une des revendications 1 à 3, et comportant un élément de repositionnement (50), au niveau duquel le palier à rotule (36, 38) disposé de manière fixe, la première tête d'arbre de transmission (16) étant rapportée sur l'antenne à balayage électronique (12).

5. Antenne à balayage électronique selon la revendication 4, dans lequel l'élément de repositionnement est configuré sous la forme d'un élément de repositionnement à plateau oscillant.

6. Antenne à balayage électronique selon la revendication 4, dans lequel l'élément de repositionnement est configuré sous la forme d'un élément de repositionnement à double plateau oscillant (50).

7. Antenne à balayage électronique selon une des revendications 4 à 6, dans lequel l'élément de repositionnement (50) présente au moins une denture interne (40 ; 42 ; 44).

8. Antenne à balayage électronique selon la revendication 7, dans lequel pour chaque denture interne (40 ; 42 ; 44) un moteur électrique est prévu pour leur entraînement, et pour chaque moteur électrique deux contacteurs de fin de course sont prévus pour limiter l'angle de rotation de la denture interne respective.
